(19) Europäisches Patentamt / European Patent Office / Office européen des brevets

(11) **EP 3 409 373 B1**

(12) **EUROPEAN PATENT SPECIFICATION**

(45) Date of publication and mention
of the grant of the patent:
**15.04.2020 Bulletin 2020/16**

(51) Int Cl.:
**B05B 5/025** *(2006.01)*    **B05B 7/06** *(2006.01)*
**G01N 23/20008** *(2018.01)*

(21) Application number: **17382333.7**

(22) Date of filing: **02.06.2017**

(54) **DEVICE AND METHOD FOR THE PRODUCTION OF AERODYNAMICALLY STABILIZED, ELECTRIFIED MICROSCOPIC JETS FOR THE TRANSPORT OF SAMPLES**

VORRICHTUNG UND VERFAHREN ZUR ERZEUGUNG VON AERODYNAMISCH STABILISIERTEN, ELEKTRIFIZIERTEN MIKROSKOPISCHEN STRAHLEN ZUM TRANSPORT VON PROBEN

DISPOSITIF ET PROCÉDÉ DE PRODUCTION DE JETS MICROSCOPIQUES ÉLECTRIFIÉS AÉRODYNAMIQUEMENT STABILISÉS POUR LE TRANSPORT D'ÉCHANTILLONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.12.2018 Bulletin 2018/49**

(73) Proprietors:
• **Universidad De Sevilla**
  **41013 Sevilla (ES)**
• **Deutsches Elektronen-Synchrotron DESY**
  **22607 Hamburg (DE)**

(72) Inventors:
• **Gañán Calvo, Alfonso Miguel**
  **41092 Sevilla (ES)**
• **Cruz Mazo, Francisco**
  **41092 Sevilla (ES)**
• **Díaz Quintana, Antonio Jesús**
  **41012 Sevilla (ES)**
• **Díaz Moreno, Irene**
  **41012 Sevilla (ES)**
• **Gañán Riesco, Braulio**
  **41900 Camas, Sevilla (ES)**
• **Wiedorn, Max Oliver**
  **D-22607 Hamburg (DE)**
• **Chapman, Henry**
  **D-22607 Hamburg (DE)**
• **Bajt, Sasa**
  **D-22607 Hamburg (DE)**

(74) Representative: **Tribalyte Ideas**
  **Gta. Quevedo 8, 6°2**
  **28015 Madrid (ES)**

(56) References cited:
**WO-A1-98/56894      WO-A1-03/041869**
**US-A- 6 147 345      US-A1- 2013 308 756**

• **DEPONTE D P ET AL: "Gas dynamic virtual nozzle for generation of microscopic droplet streams; Gas dynamic nozzle", JOURNAL OF PHYSICS D: APPLIED PHYSICS, INSTITUTE OF PHYSICS PUBLISHING LTD, GB, vol. 41, no. 19, 7 October 2008 (2008-10-07), page 195505, XP020140896, ISSN: 0022-3727, DOI: 10.1088/0022-3727/41/19/195505**
• **D. P. DEPONTE; K. NASS; F. STELLATO; M. LIANG; H. N. CHAPMAN: "Sample Injection for Pulsed X-ray Sources", SPIE, PO BOX 10 BELLINGHAM WA 98227-0010, USA, 27 May 2011 (2011-05-27), XP040559704,**

## Description

### FIELD OF THE INVENTION

The present invention relates to devices and methods for molecular analysis and transport of preferably biological samples, but without limitation to samples of any other nature. Said devices and methods use a microscopic jet of liquid as a carrier of the samples, wherein said jet is generated by combining the application of an electric field and a gas stream around said liquid.

### BACKGROUND OF THE INVENTION

Various technologies for the analysis of biological samples are currently known in the art. They generally comprise the generation of jet streams of nebulization particles, such as those based on "Gas Dynamic Virtual Nozzle" (GDVN) solutions, as described for example in [1] or in [2], which are based on Flow Focusing technologies (see [3]). Other known technologies for this purpose are based on "Lipidic Cubic Phase Injector" (or LCPI) systems, as disclosed in [4]. WO98/56894 A1 discloses a device for generating a spray, comprising a capillary tube for transporting biological material suspended in a solution, and a nozzle portion, concentric with the capillary tube, for flowing a sheath gas about the capillary tube. The capillary tube forms an electrode and a platform functions as a second electrode such that a cone shaped liquid meniscus is formed. The end of the capillary tube extends from the end of the nozzle, which has an inner diameter of 0.2 cm, by less than 5 mm.

WO03/041869 A1 discloses a device comprising a capillary for transporting a liquid and a tube surrounding the capillary for providing a stream of gas. The stream of gas focusses a cone generated from the liquid by an electric field.

US6147345 A discloses a device comprising an electrospray needle and a coaxial reagent gas tube.

Although the aforementioned technologies allow obtaining suitable analysis results for jets generated with microscopic scale diameters, they all have a severe limitation when working at smaller scales. This implies, therefore, a restriction as to the type of substances that can be analyzed with the mentioned technologies, not allowing, for instance, to work on nanometric scales, which are of particular interest in certain areas such as the analysis of certain biological samples, due to its special molecular configuration.

Reducing the diameter of the jets generated enables substantially reducing the scattering background in relation to the diffraction signal from the sample. This background is proportional to the total mass of material intersected by the pulsed and focused beam of energy used (typically, an X-ray beam). Therefore, it is necessary in the present field to find solutions that allow working with diameters lower than the known ones, thereby significantly reducing the effect of the background noise, and thus allowing measurements of smaller samples at a given ratio of signal to background.

Specifically, this reduction of scale would allow, in the field of biological analyses, to perform diffraction studies of a single fiber of proteins, fibrils or filaments. As these become aligned with the flow in the jet, the possibility of working with narrower jets would therefore provide a reduction of background derived from the better alignment obtained, which is especially important in this type of studies, since the diffraction of the fiber is, in general, very weak.

Additionally, it is desirable to obtain technical solutions that allow generating velocities of the liquid in the jet much higher than those obtained by other techniques, such as GDVN or LCPI. The achievement of high velocities allows to increase the frequency of measurements performed, which results in a proportional improvement of the efficiency of these technologies in the analyses carried out, in particular as regards the use of the sample, which requires much smaller quantities, and the much greater number of measures per unit of time that can be obtained.

The present invention solves the aforementioned needs in the state of the art by means of a novel device for the production of aerodynamically stabilized and electrified microscopic jets for the transport of samples, and a method comprising the use of said device.

References:

[1]- D.P. De Ponte, U. Weierstall, K. Schmidt, J. Warner, D.Starodub, J.C.H. Spence and R.B. Doak, "Gas dynamic virtual nozzle for generation of microscopic droplet streams". J. Phys. D: Appl. Phys. 41 (2008) 195505.

[2]- H. Chapman et al., "Femtosecond X-ray protein nanocrystallography". Nature 470, 73-78 (2011).

[3]- A. M. Gañán-Calvo, "Generation of Steady Liquid Microthreads and Micron-Sized Monodisperse Sprays in Gas Streams". Phys. Rev. Lett. 80, 285-288 (1998).

[4]- U. Weierstall et al., "Lipidic Cubic Phase Injector Facilitates Membrane Protein Serial Femtosecond Crystallography". Nature Comm. 5, 3309 (1-6) (2014).

**BRIEF DESCRIPTION OF THE INVENTION**

The present invention proposes a method and a device for the molecular analysis of biological or other samples by conveying microscopic amounts of said samples by a high speed liquid microscopic jet acting as a vehicle to a point where said jet with the samples interact with a pulsed and focused beam of high density energy. In particular, such a beam may, for example, come from a Free Electron Laser (FEL) such as for example, the "European XFEL", the "Linac Coherent Light Source" or the "SwissFEL", or from a synchrotron-radiation facility.

The proposed invention generates a jet having sufficient length, diameter and velocity to ensure: (i) that the sequence of beam pulses and their intensity do not disturb the stability of the jet or of the system from which it comes, and (ii) that all pulses interact with the jet under the same conditions. For this purpose, this invention employs several elements:

(a) a capillary conduit through which a transport liquid is fed continuously;
(b) said liquid having physical properties (density, viscosity, surface tension, and electrical conductivity) such that the velocity formed by the combination of density, surface tension, electrical conductivity, and vacuum permittivity preferably exceeds 50 meters per second, and the length formed by the viscosity, density and surface tension exceeds 1 micrometer;
(c) a nozzle located concentrically around the capillary, and through which a stabilizing gas stream is fed, such that the capillary exceeds the outlet of said nozzle;
(d) an electrode connected to the liquid to which an electric potential is applied with respect to another electrode located at the opposite side of the outlet of the capillary tube, and which ensures formation of a stable microscopic capillary jet of the liquid.

In addition, the sample is either previously added to the transport liquid or introduced into the stream of transport liquid upstream of the outlet of the capillary duct by any method, such as suspending another liquid (liquor) through another capillary conduit discharging into the capillary of the matrix liquid.

As a fundamental feature of this invention, the stabilizing gas stream provides the mechanical conditions for forming the stationary and stable microscopic capillary jet, so that in the absence of said gas stream the necessary microscopic capillary jet stability conditions would not occur to bring the samples to the point of interaction with the energy beam in a continuous, reproducible manner, and with minimal consumption of said samples.

Other fundamental features of this invention of particular utility for the indicated application are:

- It produces microscopic capillary jets of very low diameter (up to several orders of magnitude lower, reaching the nanometric scale) compared to other techniques used for the aforementioned purposes and application.
- It allows liquid speeds in the jet much higher than the ones obtained by other techniques such as in GDVN or LCPI. In fact, one can typically exceed speed values of 100 m/s. Also, measurements may be carried out at rates greater than 1 MHz. Although the present invention is not limited to be used at the European X-ray Free Electron Laser (EuXFEL), which operates with the ultra-short pulses (about 10 femtoseconds) and high repetition rate of up to 4.5 MHz, the extreme high rate in measurements and the efficiency in the use of the samples is an essential aspect that the present invention solves in combination with said rate of repetition of the energy beam.

The object of the invention is achieved by a device according to claim 1.

In a preferred embodiment of the invention, the electrode opposite the electrode connected to the transport liquid comprises a flat electrode, an annular electrode and/or a circular or conical electrode.

In another preferred embodiment of the invention, the device further comprises a sample-housing capillary, concentric and inner to the transport liquid capillary, configured to house a liquid carrying said samples.

According to the invention, the discharge end of the transport capillary exceeds the discharge section of the nozzle a distance not greater than five times the diameter of said section.

Another object of the invention relates to a method according to claim 4.

In a preferred embodiment of the invention, the reference velocity of said transport liquid (2) expressed as

$$\left(\frac{\sigma\kappa}{\rho\varepsilon_o}\right)^{1/3}$$

is greater than 50.0 meters per second.

In another preferred embodiment of the invention, the difference of potential (V) between the electrodes is between 2 and 3 times the voltage $\left(\dfrac{\sigma D_l}{\varepsilon_o}\right)^{1/2} \times \mathrm{Ln}\left(\dfrac{H}{D_l}\right)$.

In another preferred embodiment of the invention, wherein a liquid flow through the transport capillary is forced to be less than 500 times the reference flow expressed as $\dfrac{\sigma \varepsilon_o}{\rho \kappa}$.

In another preferred embodiment of the invention, in the discharge section, the Reynolds number $\mathrm{Re}_g = \dfrac{\rho_g v_g D_g}{\mu_g}$ is less than 1000 and greater than 10.

In another preferred embodiment of the invention, given the viscosity $\mu$ of the liquid, the reference length $\dfrac{\mu^2}{\rho \sigma}$ is equal to or greater than 1 micrometer.

In another preferred embodiment of the invention, the samples are introduced into the liquid by suspension, solution, or emulsion, either directly or by introducing them previously into another liquid which is subsequently mixed or emulsified in the matrix liquid.

In another preferred embodiment of the invention, the samples are continuously introduced into the liquid flowing through the capillary, by a sample capillary which discharges the sample carrying liquid into the capillary.

In another preferred embodiment of the invention, a defined and convergent stream of the sample carrier liquid is generated which ultimately flows coaxially through the interior of the microscopic stream entrained by the matrix liquid.

## DESCRIPTION OF THE DRAWINGS

Fig. 1: General diagram of the device of the invention, according to a preferred embodiment thereof, showing the main elements of said device.

Fig. 2: Perspective view of the device of the invention, according to a preferred embodiment thereof.

Fig. 3: Micrograph of a preferred embodiment of the device of the invention, showing the conical meniscus and the microscopic capillary jet generated in the use of said device.

Fig. 4: Schematic of the device of the invention, according to a preferred embodiment thereof based on the use of a conical electrode.

Fig. 5: Schematic of the device of the invention, according to a preferred embodiment thereof based on the use of an annular electrode.

Fig. 6: Preferred configuration of introduction of the samples, through a capillary through which a carrier liquid flows, and which discharges into the liquid forming a defined and focused current.

Numerical references used in the drawings:

| | |
|---|---|
| (1) | Samples |
| (2) | Transport liquid or matrix |
| (3) | Transport liquid capillary |
| (4) | Capillary outlet section |
| (5) | Stabilizing gas funnel or nozzle |

(continued)

| (6) | Discharge section of funnel or nozzle |
|---|---|
| (7) | First voltage connection electrode to transport liquid |
| (8) | Second electrode opposite to the liquid, with which a difference of electric potential (V) is established |
| (9) | Stabilizing gas |
| (10) | Stable conical capillary meniscus |
| (11) | Microscopic stable capillary jet |
| (12) | Sample housing capillary |
| (13) | Sample carrier liquid |

## DETAILED DESCRIPTION OF THE INVENTION

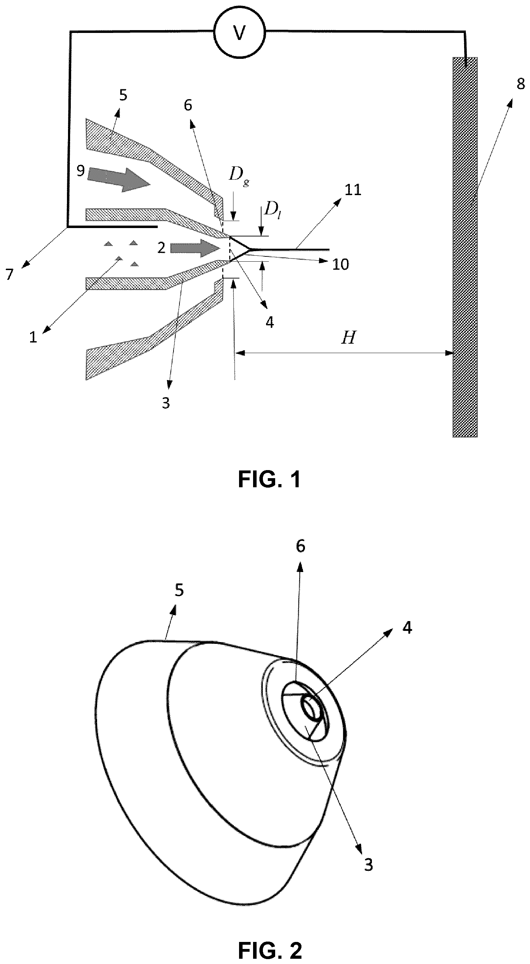

Different examples of preferred embodiments of the present invention are shown in Figures 1-6 herein. In said Figures, it is seen how the sample (1) transport and analysis device of the invention comprises a transport liquid capillary (3) configured to receive transport liquid (2), configured with an outlet section (4) for forming a stable conical capillary meniscus (10), from which emerges a microscopic capillary jet (11) which remains stable and stationary, and which is a vehicle of the samples (1) which have been Introduced into the transport liquid (2) previously. To achieve this effect, the device further comprises a nozzle (5) arranged concentrically and externally to the transport liquid capillary (3), wherein said nozzle (5) comprises a discharge section (6). The space between the transport liquid capillary (3) and the nozzle (5) is configured to house a stabilizing gas (9).

The device further comprises at least one first electrode (7) for connecting a voltage to the transport liquid (2), and a second opposite electrode (8) arranged at the outlet of the transport liquid capillary (3) and the nozzle (5), wherein said electrodes (7, 8) are subjected to an electrical potential difference (V).

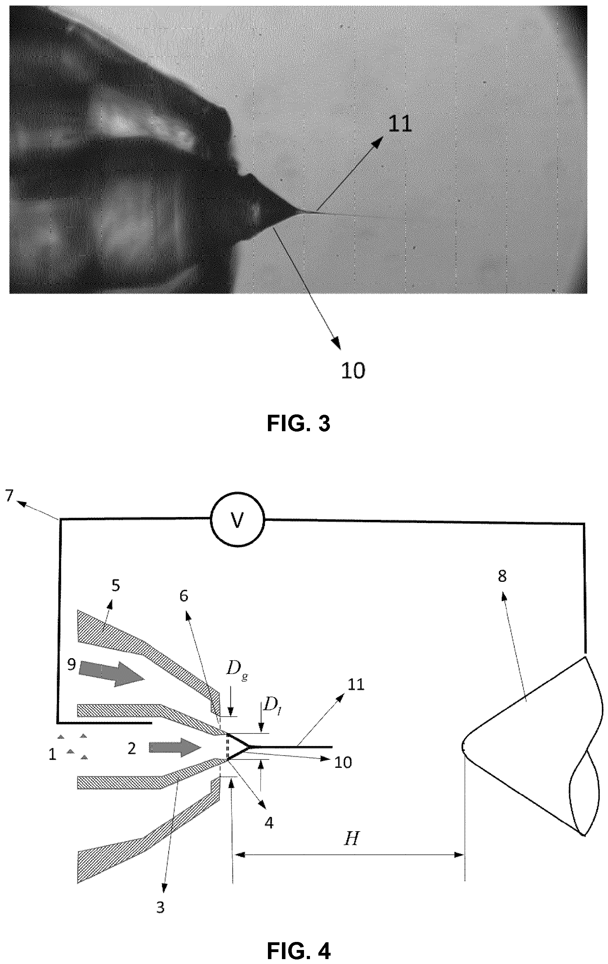

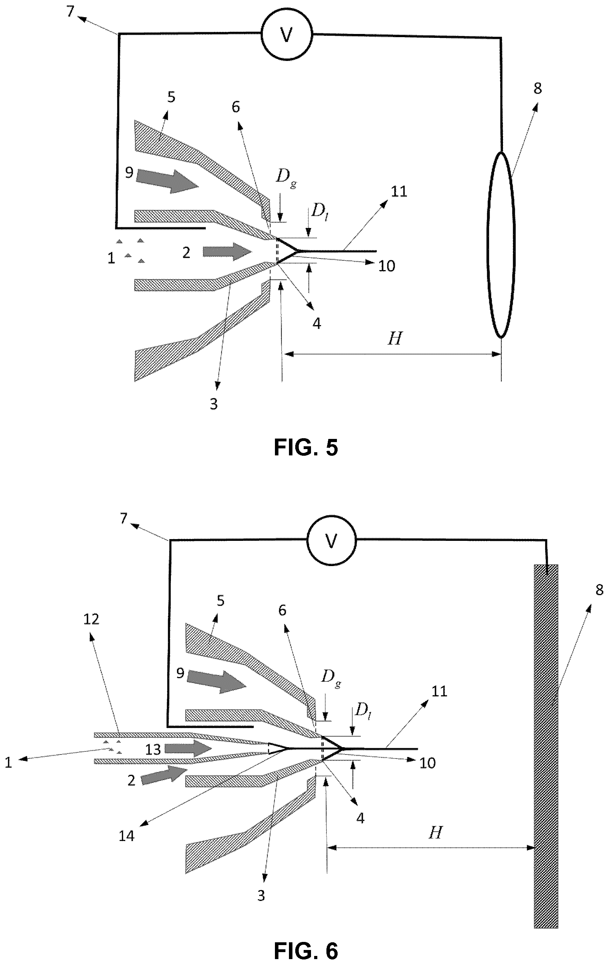

In different preferred embodiments of the invention, the second electrode (8) opposite to the electrode (7) connected to the transport liquid (2) may be, for example, a flat electrode (Fig. 1), a conical electrode (Fig. 4), or a circular or annular electrode (Fig. 5). Other electrode forms are equally feasible within the scope of the invention, as defined by the claims. The samples (1) to be transported are preferably housed or introduced by the transport capillary (3) (Figures 1, 4 and 5). However, in other preferred embodiments of the invention (Fig. 6), the device may comprise a sample housing capillary (12), concentric and internal to the transport liquid capillary (3), configured to house a liquid (13) carrying said samples (1).

Another object of the invention relates to a process for the transport of biological or other samples and for analysis by interaction with a pulsed and focused beam of energy (for example by means of X-rays). Said method comprises carrying out the following steps:

- The samples (1) are introduced into a conveying liquid (2), which is forced to flow continuously through a transport liquid capillary (3) whose outlet section (4), with diameter $D_l$, is concentrically surrounded by a nozzle (5).
- The end (4) of the transport liquid capillary (3) exceeds a distance of no more than five times the diameter of the discharge section (6) from said nozzle (5).
- Given the following physical properties of the transport liquid (2): surface tension $\sigma$ with either its vapor or vacuum, electric conductivity $\kappa$, density $\rho$ and electrical permittivity of vacuum $\varepsilon_o$, the reference velocity of said transport liquid (2) expressed as $\left( \dfrac{\sigma \kappa}{\rho \varepsilon_o} \right)^{1/3}$ is equal to or greater than 5.0 meters per second; preferably larger than 50 meters per second.
- Given the liquid viscosity $\mu$, the reference length $\dfrac{\mu^2}{\rho \sigma}$ is equal to or greater than 0.1 micrometer;
- A first electrode (7) is connected to the transport liquid (2), and another planar electrode (8) is placed in front of the outlet of the capillary at a distance $H$, and a potential difference V between both of them is established between 1

$$\left(\frac{\sigma D_l}{\varepsilon_o}\right)^{1/2} \times \mathrm{Ln}\left(\frac{H}{D_l}\right),$$

and 4 times the voltage preferably between 2 and 3 times the foregoing voltage;

- a flow of transport liquid (2) is forced through the transport liquid capillary (3) equal to or less than 100000 times the

$$\frac{\sigma \varepsilon_o}{\rho \kappa};$$

reference flow expressed as preferably less than 15 to 500 times said reference flow rate.

- A stream of stabilizing gas (9) is discharged concentrically with the transport liquid (2) through the nozzle (5);
- given the density of the gas $\rho_g$, the speed of the gas $v_g$, and the opening diameter $D_g$ of said discharge section, the

$$\mathrm{Re}_g = \frac{\rho_g v_g D_g}{\mu_g}$$

Reynolds number is between 0.1 and 5000; preferably less than 1000 and greater than 10.

- Under all of the above conditions, the transport liquid (2) forms at the outlet section (4) of the transport liquid capillary (3) a stable conical capillary meniscus (10) from the apex of which emerges a microscopic capillary jet (11) which remains stable and stationary, and is a vehicle of the samples (1) which have been introduced into the transport liquid (2) previously.

Preferably, the samples (1) are introduced into the transport liquid (2) by suspension, solution, or emulsion either directly or by previously introducing them into another liquid which is subsequently mixed or emulsified in the transport liquid (2).

In another embodiment of the method of the invention, the samples (1) are introduced continuously into the transport liquid (2) flowing through the transport liquid capillary (3), by means of a sample housing capillary (12) discharging the sample carrying liquid (13) inside the transport liquid capillary (3).

In another embodiment of the method of the invention, a defined and convergent stream of the sample carrier liquid (13) is generated which finally flows coaxially through the interior of the microscopic capillary jet (11) drawn by the transport liquid (2).

**Claims**

1. Device for the production of aerodynamically stabilized, electrified microscopic jets, suitable for the transport of biological or other samples (1) for molecular analysis, comprising:

   - a transport liquid capillary (3) configured to receive a transport liquid (2), the transport liquid capillary (3) comprising an outlet section (4), with diameter $D_l$;
   - a nozzle (5) disposed concentrically and externally to the transport liquid capillary (3), wherein said nozzle (5) comprises a discharge section (6) having an opening diameter $D_g$; and wherein there is a stabilizing space between the transport liquid capillary (3) and the nozzle (5) configured to house a stabilizing gas (9); wherein the outlet section (4) of the transport liquid capillary (3) protrudes from the discharge section (6) of the nozzle (5) by a distance not exceeding five times the opening diameter $D_g$ of said discharge section (6);
   - at least one first electrode (7) configured to provide a voltage to the transport liquid (2);
   - a second electrode (8) arranged in front of the outlet section (4) of the transport liquid capillary (3) at a distance H, and connected to the first electrode (7);
   
   wherein, given the surface tension $\sigma$ of the transport liquid (2) and the electrical permittivity of vacuum $\varepsilon_0$, and Ln referring to the natural logarithm, the device is configured to subject said first electrode (7) and said second

   $$\left(\frac{\sigma D_l}{\varepsilon_o}\right)^{1/2} \times \mathrm{Ln}\left(\frac{H}{D_l}\right);$$

   electrode (8) to an electrical potential difference (V) between 1 and 4 times the voltage which produces an electric field on the transport liquid (2) emerging from the outlet section (4) sufficient to stretch it in the shape of a conical meniscus.

2. Device according to the preceding claim, wherein the second electrode (8) comprises a flat electrode, an annular or circular electrode and/or a conical electrode.

3. Device according to any one of the preceding claims, further comprising a sample housing capillary (12), concentric and internal to the transport liquid capillary (3), configured to house a sample carrier liquid (13) carrying said samples (1).

4. Method for the production of aerodynamically stabilized, electrified microscopic jets, suitable for the transport of biological or other samples (1) for molecular analysis; which comprises the use of a device according to any one of the preceding claims, and carrying out at least the following steps:

- the samples (1) are introduced into the transport liquid (2), which is forced to flow continuously through the transport liquid capillary (3) whose outlet section (4), with diameter $D_l$, is concentrically surrounded by the nozzle (5);
- given the following physical properties of the transport liquid (2): surface tension $\sigma$ with either its vapor or vacuum, electric conductivity $\kappa$, density $\rho$ and electrical permittivity of vacuum $\varepsilon_o$, the reference velocity of said transport liquid (2) expressed as

$$\left( \frac{\sigma \kappa}{\rho \varepsilon_o} \right)^{1/2}$$

is equal to or greater than 5.0 meters per second;
- given the viscosity $\mu$ of the transport liquid (2), the reference length

$$\frac{\mu^2}{\rho \sigma}$$

is equal to or greater than 0.1 micrometer;
- the first electrode (7) is connected to the transport liquid (2), and the second electrode (8) is placed in front of the outlet section (4) of the transport liquid capillary (3) at the distance $H$, and an electrical potential difference (V) is applied between the first electrode (7) and the second electrode (8), wherein the electrical potential difference (V) is between 1 and 4 times the voltage

$$\left( \frac{\sigma D_l}{\varepsilon_o} \right)^{1/2} \times \mathrm{Ln}\left( \frac{H}{D_l} \right);$$

which produces an electric field on the transport liquid (2) emerging from the outlet section (4);
- a flow of the transport liquid (2) is forced through the transport liquid capillary (3) equal to or less than 100000 times the reference flow expressed as

$$\frac{\sigma \varepsilon_o}{\rho \kappa};$$

- a stream of stabilizing gas (9) is discharged concentrically with the transport liquid (2) through the nozzle (5);
- given the density of the stabilizing gas (9) $\rho_p$, the speed of the stabilizing gas (9) $v_g$, the viscosity of the stabilizing gas (9) $\mu_g$ and the opening diameter $D_g$ of said discharge section (6), the Reynolds number

$$\mathrm{Re}_g = \frac{\rho_g v_g D_g}{\mu_g}$$

is between 0.1 and 5000;
- under all of the foregoing conditions the transport liquid (2) forms at the outlet section (4) of the transport liquid capillary (3) a stable conical capillary meniscus (10) from the apex of which emerges a steady and stable microscopic capillary jet (11) that is a vehicle of the samples (1) previously introduced into the transport liquid (2).

5. Method according to the preceding claim, wherein the reference velocity of said transport liquid (2) expressed as

$$\left( \frac{\sigma \kappa}{\rho \varepsilon_o} \right)^{1/3}$$

is greater than 50 meters per second.

6. Method according to any of claims 4-5, wherein an electrical potential difference (V) between 2 and 3 times the voltage

$$\left( \frac{\sigma D_l}{\varepsilon_o} \right)^{1/2} \times \mathrm{Ln}\left( \frac{H}{D_l} \right)$$

is established between the first electrode (7) and the second electrode (8) producing an electric field on the transport liquid (2) emerging from the outlet section (4).

7. Method according to any of claims 4-6, wherein a flow of transport liquid (2) through the transport liquid capillary (3) is less than 500 times the reference flow expressed as

$$\frac{\sigma \varepsilon_o}{\rho \kappa}.$$

8. Method according to any of claims 4-7, wherein in said discharge section (6), the Reynolds number

$$\mathrm{Re}_g = \frac{\rho_g v_g D_g}{\mu_g}$$

is less than 1000 and greater than 10.

9. Method according to any of claims 4-8, wherein the reference length

$$\frac{\mu^2}{\rho \sigma}$$

is equal to or
greater than 1 micrometer.

10. Method according to any one of claims 4-9, wherein the samples (1) are introduced into the transport liquid (2) by suspension, solution, or emulsion either directly or by introducing them previously into another liquid which is subsequently mixed or emulsified in the transport liquid (2).

11. Method according to any one of claims 4-10, wherein the device further comprises a sample housing capillary (12), concentric and internal to the transport liquid capillary (3), configured to house a sample carrier liquid (13) carrying said samples (1), and wherein the samples (1) are continuously introduced into the transport liquid (2) flowing through the transport liquid capillary (3), by means of the sample housing capillary (12) discharging the sample carrier liquid (13) inside the transport liquid capillary (3).

12. Method according to claim 11, wherein a defined and convergent stream of the sample carrier liquid (13) is finally generated flowing coaxially through the interior of the microscopic capillary jet (11) entrained by the transport liquid (2).


**Patentansprüche**

1. Vorrichtung zur Erzeugung von aerodynamisch stabilisierten, elektrifizierten mikroskopischen Strahlen zum Transport von biologischen oder anderen Proben (1) für die Molekularanalyse, umfassend:

- eine Transportflüssigkeitskapillare (3), die zur Aufnahme einer Transportflüssigkeit (2) ausgestaltet ist, wobei die Transportflüssigkeitskapillare (3) einen Austrittsbereich (4) mit dem Durchmesser $D_l$ aufweist;
- eine außen um die Transportflüssigkeitskapillare (3) konzentrisch angeordnete Tülle (5), wobei die genannte Tülle (5) einen Austragsbereich (6) mit einem Öffnungsdurchmesser $D_g$ aufweist; und wobei sich zwischen der Transportflüssigkeitskapillare (3) und der Tülle (5) ein zur Aufnahme eines Stabilisierungsgases (9) ausgebildeter Stabilisierungsraum befindet; wobei der Austrittsbereich (4) der Transportflüssigkeitskapillare (3) aus dem Austragsbereich (6) der Tülle (5) um eine Länge vorsteht, die das Fünffache des Öffnungsdurchmessers $D_g$ des genannten Austragsbereichs (6) nicht übersteigt;
- mindestens eine erste Elektrode (7), die zum Anlegen einer Spannung an die Transportflüssigkeit (2) ausgelegt ist;
- ine zweite Elektrode (8), die in einem Abstand H vor dem Austrittsbereich (4) der Kapillare (3) der Transportflüssigkeit angeordnet und mit der ersten Elektrode (7) verbunden ist; wobei die Vorrichtung bei gegebener Oberflächenspannung $\sigma$ der Transportflüssigkeit (2) und angesichts der elektrischen Permittivität des Vakuums $\varepsilon_0$ und von Ln, das sich auf den natürlichen Logarithmus bezieht, so ausgelegt ist, dass die genannte erste Elektrode (7) und die genannte zweite Elektrode (8) einer elektrischen Potentialdifferenz (V) zwischen dem 1-

$$\left(\frac{\sigma D_l}{\varepsilon_o}\right)^{1/2} \times \mathrm{Ln}\left(\frac{H}{D_l}\right)$$

und 4-fachen der Spannung ausgesetzt sind; was auf der aus dem Austrittsbereich (4) austretenden Transportflüssigkeit (2) ein ausreichendes elektrisches Feld erzeugt, um sie in Form eines konischen Meniskus auszudehnen.

2. Vorrichtung nach dem vorstehenden Anspruch, wobei die zweite Elektrode (8) eine flache Elektrode, eine ringförmige oder kreisförmige Elektrode und/oder eine konische Elektrode ist.

3. Vorrichtung nach einem der vorstehenden Ansprüche, die ferner eine konzentrische Probenaufnahmekapillare (12) innerhalb der Transportflüssigkeitskapillare (3) umfasst, die zur Aufnahme einer Probenträgerflüssigkeit (13), welche die genannten Proben (1) enthält, ausgestaltet ist.

4. Verfahren zur Erzeugung von aerodynamisch stabilisierten, elektrifizierten mikroskopischen Strahlen zum Transport von biologischen oder anderen Proben (1) für die Molekularanalyse, das die Verwendung einer Vorrichtung nach einem der vorstehenden Ansprüche und die Durchführung mindestens der folgenden Schritte umfasst:

- die Proben (1) werden in die Transportflüssigkeit (2) eingebracht, die kontinuierlich durch die Transportflüssigkeitskapillare (3), deren Austrittsbereich (4) mit dem Durchmesser $D_l$, konzentrisch von der Tülle (5) umgeben ist, gedrückt wird;
- bei den gegebenen folgenden physikalischen Eigenschaften der Transportflüssigkeit (2): Oberflächenspannung $\sigma$ mit zugehörigem Dampf oder Vakuum, elektrische Leitfähigkeit $\kappa$, Dichte $\rho$ und elektrische Permittivität des Vakuums $\varepsilon_o$, ist die Referenzgeschwindigkeit der genannten Transportflüssigkeit (2), ausgedrückt als

$$\left(\frac{\sigma\kappa}{\rho\varepsilon_o}\right)^{1/2}$$

gleich oder größer als 5,0 Meter pro Sekunde ist;
- bei gegebener Viskosität $\mu$ der Transportflüssigkeit (2) ist die Referenzlänge

$$\frac{\mu^2}{\rho\sigma}$$

gleich oder größer als 0,1 Mikrometer ist;
- die erste Elektrode (7) wird an die Transportflüssigkeit (2) angeschlossen, und die zweite Elektrode (8) wird im Abstand H, vor dem Austrittsbereich (4) der Transportflüssigkeitskapillare (3) angeordnet und zwischen der ersten Elektrode (7) und der zweiten Elektrode (8) wird eine elektrische Potentialdifferenz (V) angelegt, wobei die elektrische Potentialdifferenz (V) zwischen der 1- bis 4-fachen Spannung

$$\left(\frac{\sigma D_l}{\varepsilon_o}\right)^{1/2} \times \mathrm{Ln}\left(\frac{H}{D_l}\right);$$

liegt, was auf der aus dem Austrittsbereich (4) austretenden Transportflüssigkeit (2) ein elektrisches Feld erzeugt;
- durch die Transportflüssigkeitskapillare (3) wird ein Strom der Transportflüssigkeit (2) gedrückt, der gleich oder kleiner als das 100000-fache des Referenzstroms ist, ausgedrückt als

$$\frac{\sigma\varepsilon_o}{\rho\kappa};$$

- ein Stabilisierungsgasstrom (9) wird konzentrisch mit der Transportflüssigkeit (2) durch die Tülle (5) ausgetragen;
- bei gegebener Dichte des Stabilisierungsgases (9) $\rho_g$, Geschwindigkeit des Stabilisierungsgases (9) $v_g$, Viskosität des Stabilisierungsgases (9) $\mu_g$ und Öffnungsdurchmesser $D_g$ des genannten Austragsbereichs (6), liegt die Reynoldssche Zahl

$$\mathrm{Re}_g = \frac{\rho_g v_g D_g}{\mu_g}$$

zwischen 0,1 und 5000;
- unter allen vorgenannten Bedingungen bildet die Transportflüssigkeit (2) am Austrittsbereich (4) der Transportflüssigkeitskapillare (3) einen beständigen konischen Kapillarmeniskus (10), aus dessen Spitze ein konstanter und gleichmäßiger mikroskopischer Kapillarstrahl (11) austritt, der ein Trägermedium für die zuvor in die Transportflüssigkeit (2) eingebrachten Proben (1) ist.

**5.** Verfahren nach dem vorstehenden Anspruch, wobei die Referenzgeschwindigkeit der Transportflüssigkeit (2), ausgedrückt als

$$\left( \frac{\sigma \kappa}{\rho \varepsilon_o} \right)^{1/3}$$

größer als 50 Meter pro Sekunde ist.

6. Verfahren nach einem der Ansprüche 4-5, wobei eine elektrische Potentialdifferenz (V) zwischen dem 2- und 3-fachen der Spannung

$$\left( \frac{\sigma D_i}{\varepsilon_o} \right)^{1/2} \times \mathrm{Ln}\left( \frac{H}{D_i} \right)$$

zwischen der ersten Elektrode (7) und der zweiten Elektrode (8) angelegt wird, was auf der aus dem Austrittsbereich (4) austretenden Transportflüssigkeit (2) ein elektrisches Feld erzeugt.

7. Verfahren nach einem der Ansprüche 4-6, wobei ein Strom der Transportflüssigkeit (2) durch die Transportflüssigkeitskapillare (3) kleiner ist als das 500-fache des Referenzstroms, ausgedrückt als

$$\frac{\sigma \varepsilon_o}{\rho \kappa}.$$

8. Verfahren nach einem der Ansprüche 4-7, wobei die Reynoldssche Zahl in dem genannten Austragsabschnitt (6)

$$\mathrm{Re}_g = \frac{\rho_g v_g D_g}{\mu_g}$$

kleiner als 1000 und größer als 10 ist.

9. Verfahren nach einem der Ansprüche 4-8, wobei die Referenzlänge

$$\frac{\mu^2}{\rho \sigma}$$

gleich oder größer als 1 Mikrometer ist.

10. Verfahren nach einem der Ansprüche 4-9, wobei die Proben (1) durch Suspension, Lösung oder Emulsion entweder direkt oder durch vorheriges Einbringen in eine andere Flüssigkeit, die anschließend mit der Transportflüssigkeit (2) gemischt oder emulgiert wird, in die Transportflüssigkeit (2) eingebracht werden.

11. Verfahren nach einem der Ansprüche 4-10, wobei die Vorrichtung ferner eine konzentrische Probenaufnahmekapillare (12) innerhalb der Transportflüssigkeitskapillare (3) umfasst, die zur Aufnahme einer Probenträgerflüssigkeit (13), welche die genannten Proben (1) enthält, ausgestaltet ist, und wobei die Proben (1) kontinuierlich in die durch die Transportflüssigkeitskapillare (3) fließende Transportflüssigkeit (2) eingebracht werden, indem die Probenaufnahmekapillare (12) die Probenträgerflüssigkeit (13) in die Transportflüssigkeitskapillare (3) abgibt.

12. Verfahren nach Anspruch 11, bei dem schließlich ein definierter und konvergenter Strom der Probenträgerflüssigkeit (13), der koaxial durch das Innere des von der Transportflüssigkeit (2) mitgerissenen mikroskopischen Kapillarstrahls (11) fließt, erzeugt wird.

**Revendications**

1. Dispositif de production de jets microscopiques électrifiés aérodynamiquement stabilisés appropriés pour le transport d'échantillons biologiques ou autres (1) pour l'analyse moléculaire, comprenant :

   - un capillaire de liquide de transport (3) configuré pour recevoir un liquide de transport (2), le capillaire de liquide de transport (3) comprenant une section de sortie (4), avec un diamètre $D_l$;
   - une buse (5) disposée concentriquement et extérieurement au capillaire de liquide de transport (3), dans lequel ladite buse (5) comprend une section de décharge (6) ayant un diamètre d'ouverture $D_g$ ; et dans lequel il y a un espace de stabilisation entre le capillaire de liquide de transport (3) et la buse (5) configuré pour loger un gaz de stabilisation (9) ; dans lequel la section de sortie (4) du capillaire de liquide de transport (3) fait saillie de la section de décharge (6) de la buse (5) d'une distance ne dépassant pas cinq fois le diamètre d'ouverture $D_g$ de ladite section de décharge (6) ;
   - au moins une première électrode (7) configurée pour fournir du voltage au liquide de transport (2) ;
   - une deuxième électrode (8) disposée devant la section de sortie (4) du capillaire de liquide de transport (3) à une distance H, et reliée à la première électrode (7) ; dans lequel, étant donné la tension superficielle $\sigma$ du liquide de transport (2) et la permittivité électrique du vide $\varepsilon_0$, et Ln se référant au logarithme naturel, le dispositif est configuré pour soumettre ladite première électrode (7) et ladite deuxième électrode (8) à une différence de

   $$\left(\frac{\sigma D_l}{\varepsilon_o}\right)^{1/2} \times \mathrm{Ln}\left(\frac{H}{D_l}\right)$$

   potentiel électrique (V) entre 1 et 4 fois le voltage , ce qui produit un champ électrique sur le liquide de transport (2) sortant de la section de sortie (4) suffisant pour l'étirer sous la forme d'un ménisque conique.

2. Dispositif selon la revendication précédente, dans lequel la deuxième électrode (8) comprend une électrode plate, une électrode annulaire ou circulaire et/ou une électrode conique.

3. Dispositif selon l'une quelconque des revendications précédentes, comprenant en outre un capillaire de logement d'échantillon (12), concentrique et interne au capillaire de liquide de transport (3), configuré pour loger un liquide porteur d'échantillon (13) transportant lesdits échantillons (1).

4. Procédé de production de jets microscopiques électrifiés aérodynamiquement stabilisés appropriés pour le transport d'échantillons biologiques ou autres (1) pour l'analyse moléculaire ; qui comprend l'utilisation d'un dispositif selon l'une quelconque des revendications précédentes, et la réalisation d'au moins les étapes suivantes :

   - les échantillons (1) sont introduits dans le liquide de transport (2), qui est forcé de s'écouler en continu à travers le capillaire de liquide de transport (3) dont la section de sortie (4), d'un diamètre de $D_l$, est entourée concentriquement par la buse (5) ;
   - étant donné les propriétés physiques suivantes du liquide de transport (2) : tension superficielle $\sigma$ avec soit sa vapeur soit le vide, conductivité électrique $\kappa$, densité $\rho$ et permittivité électrique du vide $\varepsilon_o$, la vitesse de référence dudit liquide de transport (2) exprimée comme

   $$\left(\frac{\sigma\kappa}{\rho\varepsilon_o}\right)^{1/3}$$

   est égale ou supérieure à 5,0 mètres par seconde ;
   - étant donnée la viscosité $\mu$ du liquide de transport (2), la longueur de référence

$$\frac{\mu^2}{\rho\sigma}$$

est égale ou supérieure à 0,1 mètres par seconde ;
- la première électrode (7) est connectée au liquide de transport (2), et la deuxième électrode (8) est placée devant la section de sortie (4) du capillaire de liquide de transport (3) à la distance H, et une différence de potentiel électrique (V) est appliquée entre la première électrode (7) et la deuxième électrode (8), dans lequel la différence de potentiel électrique (V) est comprise entre 1 et 4 fois le voltage

$$\left(\frac{\sigma D_l}{\varepsilon_0}\right)^{1/2} \times \mathrm{Ln}\left(\frac{H}{D_l}\right);$$

 qui produit un champ électrique sur le liquide de transport (2) sortant de la section de sortie (4) ;
- un flux du liquide de transport (2) est forcé à travers le capillaire de liquide de transport (3) égal ou inférieur à 100000 fois le flux de référence exprimé comme

$$\frac{\sigma\varepsilon_0}{\rho\kappa};$$

- un courant de gaz stabilisateur (9) est déchargé concentriquement au liquide de transport (2) par la buse (5) ;
- étant donnée la densité du gaz stabilisateur (9) $\rho_g$, la vitesse du gaz stabilisateur (9) $v_g$, la viscosité du gaz stabilisateur (9) $\mu_g$ et le diamètre d'ouverture $D_g$ de ladite section de décharge (6), le nombre de Reynolds

$$\mathrm{Re}_g = \frac{\rho_g v_g D_g}{\mu_g}$$

est compris entre 0,1 et 5000 ;
- dans toutes les conditions précédentes, le liquide de transport (2) forme à la section de sortie (4) du capillaire de liquide de transport (3) un ménisque capillaire conique stable (10) à partir de l'apex duquel sorte un jet capillaire microscopique stable et régulier (11) qui est un véhicule des échantillons (1) préalablement introduits dans le liquide de transport (2).

5. Procédé selon la revendication précédente, dans lequel la vitesse de référence dudit liquide de transport (2), exprimée comme

$$\left(\frac{\sigma\kappa}{\rho\varepsilon_0}\right)^{1/3}$$

est supérieure à 50 mètres par seconde.

6. Procédé selon l'une quelconque des revendications 4-5, dans lequel une différence de potentiel électrique (V) entre 2 et 3 fois le voltage

$$\left(\frac{\sigma D_i}{\varepsilon_o}\right)^{1/2} \times \mathrm{Ln}\left(\frac{H}{D_i}\right)$$

s'établit entre la première électrode (7) et la deuxième électrode (8) produisant un champ électrique sur le liquide de transport (2) sortant de la section de sortie (4).

7. Procédé selon l'une quelconque des revendications 4-6, dans lequel un flux du liquide de transport (2) à travers le capillaire de liquide de transport (3) est inférieur à 500 fois le flux de référence exprimé comme

$$\frac{\sigma \varepsilon_o}{\rho \kappa}.$$

8. Procédé selon l'une quelconque des revendications 4-7, dans lequel, dans ladite section de décharge (6), le nombre de Reynolds

$$Re_g = \frac{\rho_g v_g D_g}{\mu_g}$$

est inférieur à 1000 et supérieur à 10.

9. Procédé selon l'une quelconque des revendications 4-8, dans lequel la longueur de référence

$$\frac{\mu^2}{\rho \sigma}$$

est égale ou supérieure à 1 micromètre.

10. Procédé selon l'une quelconque des revendications 4-9, dans lequel les échantillons (1) sont introduits dans le liquide de transport (2) par suspension, solution ou émulsion, soit directement, soit en les introduisant préalablement dans un autre liquide qui est ensuite mélangé ou émulsionné dans le liquide de transport (2).

11. Procédé selon l'une quelconque des revendications 4-10, dans lequel le dispositif comprend en outre un capillaire de logement d'échantillon (12), concentrique et interne au capillaire de liquide de transport (3), configuré pour loger un liquide porteur d'échantillon (13) portant lesdits échantillons (1), et dans lequel les échantillons (1) sont introduits en continu dans le liquide de transport (2) s'écoulant à travers le capillaire de liquide de transport (3), au moyen du capillaire de logement d'échantillon (12) déchargeant le liquide porteur d'échantillon (13) à l'intérieur du capillaire de liquide de transport (3).

12. Procédé selon la revendication 11, dans lequel un courant défini et convergent du liquide porteur d'échantillon (13) est finalement généré en s'écoulant coaxialement à travers l'intérieur du jet capillaire microscopique (11) entraîné par le liquide de transport (2).

**FIG. 1**

**FIG. 2**

**FIG. 3**

**FIG. 4**

**FIG. 5**

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9856894 A1
- WO 03041869 A1
- US 6147345 A

### Non-patent literature cited in the description

- **D.P. DE PONTE ; U. WEIERSTALL ; K. SCHMIDT ; J. WARNER ; D.STARODUB ; J.C.H. SPENCE ; R.B. DOAK.** Gas dynamic virtual nozzle for generation of microscopic droplet streams. *J. Phys. D: Appl. Phys.,* 2008, vol. 41, 195505
- **H. CHAPMAN et al.** Femtosecond X-ray protein nanocrystallography. *Nature,* 2011, vol. 470, 73-78
- **A. M. GAÑÁN-CALVO.** Generation of Steady Liquid Microthreads and Micron-Sized Monodisperse Sprays in Gas Streams. *Phys. Rev. Lett.,* 1998, vol. 80, 285-288
- **U. WEIERSTALL et al.** Lipidic Cubic Phase Injector Facilitates Membrane Protein Serial Femtosecond Crystallography. *Nature Comm.,* 2014, vol. 5 (1-6), 3309